# EUROPEAN PATENT SPECIFICATION

(11) **EP 1 095 747 B1**
(45) Date of publication and mention of the grant of the patent: **10.01.2007**
(21) Application number: 00850157.9
(22) Date of filing: 05.10.2000
(51) Int. Cl.: B27B 17/02, B27B 17/12

(54) **Chainsaw guide bar with liquid channels**
KETTENSÄGESCHWERT MIT FLÜSSIGKEITKANÄLEN
Guide-chaîne pour une scie à chaîne à conduits de liquide

(30) Priority: 28.10.1999 SE 9903889
(43) Date of publication of application: 02.05.2001
(73) Proprietor: BLOUNT INC, Portland OR 97269-2127 (US)
(72) Inventor: Pettersson, Karl-Olov, Humboldt, TN 38343 (US); Forsberg, Karl-Erik, Jackson, TN 38305 (US)
(74) Representative: Olsson, Jan

(56) References cited:
- US-A- 5 050 303
- US-A- 5 669 140

## Description

### Background

The invention relates to a chainsaw guide bar according to the preamble of claim 1. Such a chain saw guide bar is known from US-A-5669140.

It is well known to provide liquid channels in chainsaw guide bars to convey various liquids from the power unit of the chainsaw, such as lubricant for the nose sprocket, urea fungicide to the tree stump or code marking paint to the cut log. If the guide bar is made from three thin plates welded together, the channels can be made as cut-outs in the middle plate, sealed by the outer plates and welds, as described in patents US 5,778,537 and 5,797,187.

If the channels have to be very pressure tight to avoid mixing of liquid from different channels, it is possible to use separate tubes located in the channels as in patent U S 5,845,402.

One disadvantage with such tubes is that the cross-section available for the liquid is severely limited by the wall thickness of the tubes having to be enclosed in a channel with the same thickness as the groove in the guide bar edge.

For guide bars made from one solid thicker plate another way of creating liquid channels has been proposed, where grooves are milled in a surface of the plate, and tubes are located in the grooves, held in place by brazing, soldering or glueing, as described in patents U S 5,050,303 and CH 295 454. Since the grooves can be made with a depth not restricted by the chain groove width, it is easier to use tubes with appropriate wall thickness without reducing the cross-section. The main disadvantage is that brazing or soldering imply heating the entire guide bar to a temperature which lowers its strength, and glueing is not reliable in severe winter cold. Relying on friction alone is not enough, since the bar and the tubes may be made from metals with different thermal expansion.

Another chain-saw guide bar is known through US-A-5 669 140 which describes a way of in the practise glue tubes in grooves in a chain-saw guide bar. Chain-saw guide bars are often in use unintentionally bent, and it is not unusual that they are bent in an angle above 45°. This bending may be rather sharp and is located to a region directly in front of the position at which the bar is mounted to the cutting head of the saw. A high quality chain-saw guide bar may in the practise be straightened out after such bending and be used again after such an incident. It is stated in US-A-5 669 140 that the empty spaces around the deformed tube are filled with a synthetic resin to thereby consolidate the hollow pipe integrally with the guide bar, i.e. so as to by that consolidate the hollow pipe (tube) integrally with or in one piece with the guide bar. When it is proceeded in this way, i.e. a composite resin is used for filling the space around the tube so as to consolidate this in one piece with the guide bar, the tube will not be able to move in the longitudinal direction inside the groove. This means that when the guide bar is bent, which as said above happens during the use thereof, the entire strain subjected to the guide bar is applied to the tube within a very small area as a consequence of no or practically no movement of the tube inside the groove. This will finally result in an undesired extension or deformation of the tube wall within this small area when the guide bar is bent, which probably will result in fatigue and/or failure of the tube.

The object of the present invention is to solve this problem, and this is obtained in a surprisingly easy way by ensuring that the tubes are deformed to conform to the undercut faces for retaining them in the grooves solely by this deformation. Thus, the purpose of the adaption for retaining the respective tube is that if the guide bar is bent the tube may move inside the groove and for example be bent together with the guide bar or be disconnected from the liquid source without overstressing or breaking the tube or causing it to become dislocated from the guide bar. This does not mean that the tube may loosely slide within the groove, but movement is instead possible, i.e. it is not prevented by the filler material, so that when the guide bar is bent the strain that the guide bar endures will be applied across a much greater area of the tube and is therefore much less likely to result in failure or damage of the tube.

This problem is solved by the combination of features of claim 1. Further advantageous embodiments are disclosed in the dependent claims 1-4.

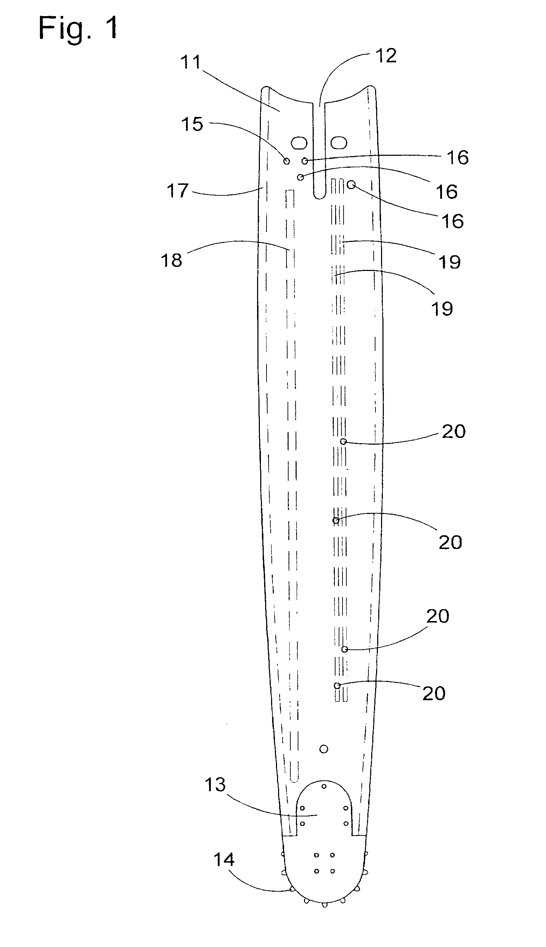

The invention is described with reference to the figures, where figure 1 shows a guide bar with channels according to the invention, figure 2 a cross-section through part of the guide bar with grooves according to the invention before locating of tubes, figure 3 the same cross-section with tubes located in the grooves, and figure 4 the same cross-section with tubes located and deformed to stay in place.

The tubes may continue all the way to the vicinity of the nose sprocket (14) if the purpose is to convey oil to the sprocket or the portion of the chain that does the actual cutting. The tubes (19) may have a limited length with one or more openings (20) to spray liquid onto the cut surface of the log or the stump.

The main problem faced by previous designs has been how to retain the tubes in the grooves in spite of vibrations, deformation in use and liquid leakage. Brazing was suggested in patent U S 5,050,303, but has found little application as it can not be made without affecting the strength of the guide bar body. Glueing has found some use but is not strong enough to withstand the strains due to temperature differences, vibration and deformation in use, especially since glues tend to be brittle and fragile in winter. According to the invention, the tubes are originally made with circular cross-section, located in grooves with undercut sides and deformed to fill the groove.

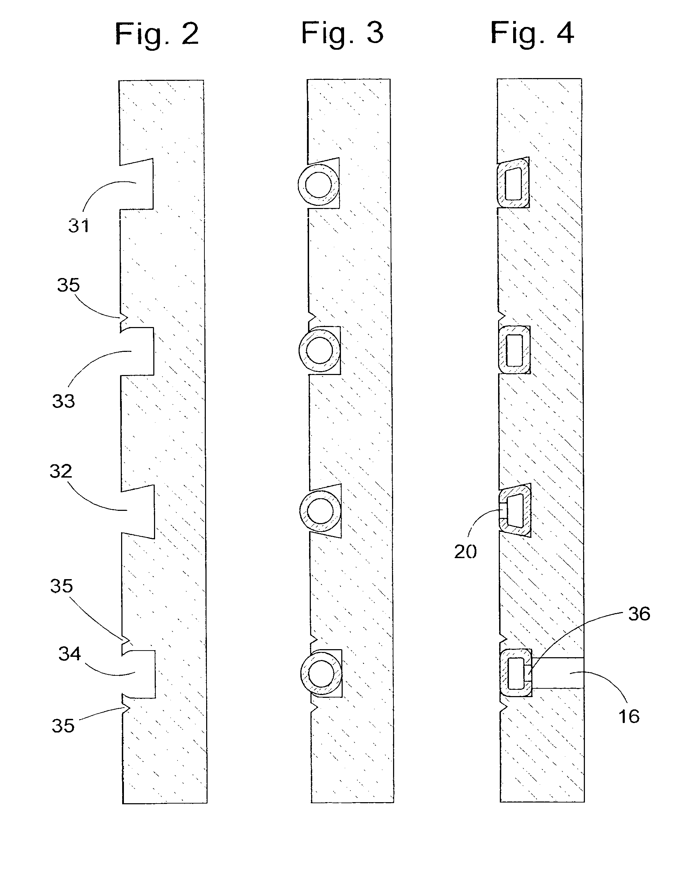

The undercut groove section can be of any type shown in figure 2. The grooves can be made with one side undercut (31) or both sides undercut (32) by milling with radial or axial milling tools, if needed by passing twice through the groove. The grooves can also be made with originally vertical faces, which in a second operation are made undercut on one or both sides (33,34) by impressing a narrow ditch (35) on one or both sides of the groove. The groove depth is smaller than the groove width, preferably between 75 and 50 % of the width.

The tubes (18,19) are preferably made from a soft deformable metal such as copper or soft brass. At least their rear end is sealed by compression and soldering. The rear end of each milled groove is located at the opposite side of the corresponding supply hole (16). After locating the tube in the groove as shown in figure 3, the tube is deformed by rolling or pressing until it fills the groove and conforms to the undercut faces as shown in figure 4. This operation fastens the tube securely without need for brazing or soldering.

The tube is then connected to the corresponding supply hole (16) by drilling through the tube wall (36). Further in front, openings (20) for spraying liquid onto the cut surface of the log or the stump are drilled through the tube wall. For customers with individual requirements as to spray patterns, this may be done after delivery to the customer. If desired, the frontmost of the openings may be wider but closeable, to admit compressed air for cleaning of the liquid channel. If the spray openings (20) are to be at the same guide bar surface as the supply holes, the openings may either be drilled through the guide bar body as well as through the tube wall, or the groove may pass through the guide bar body from one surface to the other. Tubes to convey lubricating oil should be connected to the sprocket or the chain groove at the front end.

Chainsaw guide bars are usually reversible to equalize the wear along the longitudinal edges, and in such case there are two sets of tubes. At present, reversible bars have a great problem that the liquid spray openings (20) on the side not used have a tendency to become clogged by sawdust and resin, and useless when the bar is reversed. A guide bar according to the inventions can easily have such holes cleaned with a narrow pick, or can be delivered without openings on one side, which can then be drilled by the customer when the guide bar is to be reversed. This can also allow a customer to have different spray patterns on different sides, depending on tree dimensions or tree species.

## Claims

1. Chainsaw guide bar provided with one or more tubes (18,19) to convey liquid from a rear end to one or more openings (20) closer to a front end, said tubes located in grooves (31-34) in one or both surfaces of the guide bar, the grooves having a width and a depth which is less than the width, one bottom and two side faces, at least one of the side faces being undercut, **characterized in that** the tubes are made from a soft metal such as copper or brass, and that the tubes have been deformed to conform to the undercut faces to retain them in the grooves solely by this deformation.

2. Chainsaw guide bar according to claim 1, where the grooves (33,34) were originally made with vertical faces and made undercut by impressing a narrow ditch (35) in the guide bar surface adjacent to one or both sides of the groove.

3. Chainsaw guide bar according to claim 1 or 2, where the tubes have a round cross-section before deformation.

4. Chainsaw guide bar according to claim 1, where the tubes on one or both sides are made without openings (20), which can be later.

## Patentansprüche

1. Kettensägeschwert, das mit einer oder mit mehreren Röhren (18, 19) zum Fördern von Flüssigkeit von einem hinteren Ende zu einer oder zu mehreren, näher an einem vorderen Ende befindlichen Öffnungen (20) versehen ist, wobei die Röhren in Nuten (31 - 34) in einer oder in beiden Oberflächen des Schwerts liegen und die Rinnen eine Breite und eine Tiefe, die kleiner als die Breite ist, einen Boden und zwei Seitenflächen aufweisen, wobei mindestens eine der Seitenflächen unterschnitten ist, **dadurch gekennzeichnet, dass** die Röhren aus einem weichen Metall wie Kupfer oder Messing bestehen, und dass sie derart verformt sind, dass sie sich an die unterschnittenen Flächen anformen, damit sie nur durch diese Formänderung in den Nuten gehalten werden.

2. Kettensägeschwert nach Anspruch 1, wobei die Nuten (33, 34) ursprünglich mit vertikalen Flächen ausgebildet waren und durch Eindrücken einer schmalen Kerbe (35) in das Kettensägeschwert angrenzend an eine oder an beide Seiten der Nut unterschnitten wurden.

3. Kettensägeschwert nach Anspruch 1 oder 2, wobei die Röhren vor der Formänderung einen runden Querschnitt aufweisen.

4. Kettensägeschwert nach Anspruch 1, wobei die Röhren auf einer oder auf beiden Seiten ohne Öffnungen (20) ausgebildet sind, die später eingebracht werden können.

## Revendications

1. Barre de guidage de scie à chaîne ayant un ou plusieurs tubes (18, 19) pour transporter un liquide depuis une extrémité arrière vers une ou plusieurs ouvertures (20) plus proches d'une extrémité avant, lesdits tubes étant positionnés dans des gorges (31-34) d'une ou des deux surfaces de la barre de guidage, les gorges ayant une largeur et une profondeur qui est plus petite que la largeur, une face inférieure et deux faces latérales, au moins une des faces latérales étant en contre-dépouille, **caractérisée en ce que** les tubes sont constitués d'un métal mou tel que du cuivre ou du laiton, et **en ce que** les tubes ont été déformés pour se conformer aux faces en contre-dépouille pour les retenir dans les gorges seulement par cette déformation.

2. Barre de guidage de scie à chaîne selon la revendication 1, où les gorges (33, 34) sont à l'origine munies de faces verticales et mises en contre-dépouille en imprimant une tranchée étroite (35) dans la surface de barre de guidage adjacente à un côté ou aux deux côtés de la gorge.

3. Barre de guidage de scie à chaîne selon la revendication 1 ou 2, où les tubes ont une section transversale ronde avant déformation.

4. Barre de guidage de scie à chaîne selon la revendication 1, où les tubes sur un côté ou les deux côtés sont réalisés sans ouvertures (20), qui peuvent être réalisées plus tard.
